# EUROPEAN PATENT SPECIFICATION

(11) **EP 3 693 431 B1**
(45) Date of publication and mention of the grant of the patent: **27.04.2022**
(21) Application number: 18863821.7
(22) Date of filing: 23.08.2018
(51) Int. Cl.: C09J 7/38, B32B 27/00, C09J 11/06, C09J 107/00, C09J 201/00, H01B 7/00, C09J 7/24, C09J 11/04

(54) **ADHESIVE SHEET, PROTECTIVE MATERIAL, AND WIRE HARNESS**
KLEBEFOLIE, SCHUTZMATERIAL UND KABELBAUM
FEUILLE ADHÉSIVE, MATÉRIAU DE PROTECTION, ET FAISCEAU ÉLECTRIQUE

(30) Priority: 05.10.2017 JP 2017194946
(43) Date of publication of application: 12.08.2020
(73) Proprietor: Denka Company Limited, Chuo-ku Tokyo 103-8338 (JP)
(72) Inventor: HONDA, Yuto, Machida-shi Tokyo 194-8560 (JP); YOKOZUKA, Manabu, Ichihara-shi Chiba 290-8588 (JP); HASUMI, Mizuki, Shibukawa-shi Gunma 377-8520 (JP)
(74) Representative: Adam, Holger
(86) International application number: PCT/JP2018/031075
(87) International publication number: WO 2019/069577

(56) References cited:
- WO-A1-2009/139347
- WO-A1-2013/001959
- WO-A1-2018/168990
- JP-A- 2010 037 519
- JP-A- 2014 001 312
- JP-A- 2016 056 270
- JP-A- 2016 115 511
- JP-A- 2016 194 033
- JP-A- 2017 149 938
- US-A1- 2002 053 392
- US-A1- 2017 148 552
- DATABASE WPI Week 201671 17 November 2016 (2016-11-17) Thomson Scientific, London, GB; AN 2016-62544A XP002800365, -& WO 2016/158411 A1 (NITTO DENKO CORP) 6 October 2016 (2016-10-06)

## Description

### TECHNICAL FIELD

The present invention relates to an adhesive sheet, a protective material, and a wire harness.

### BACKGROUND

Wire harnesses comprising multiple electric wire groups arranged in an automobile often bundle the wire groups and are wound with tape in order to protect the wire groups. Such tapes need insulative properties, softness and stretchability, and in addition, in accordance with their application and place of use, said tapes need heat resistance and cold resistance. However, in recent years, for the purposes of reducing man-hour labor and integrating parts, increasingly, one type of sheet is affixed all at once to the electric wire groups, thus both bundling and protecting the electric wires.

As a sheet for bundling and protecting electric wires, sheets having a dual-surface adhesive tape on one surface of a substrate are known. Such dual-surface adhesive tapes use adhesives such as those disclosed in Patent Document 1, for example. Sheets employing such a dual-surface adhesive tape can bundle and protect the electric wires by bonding adhesive layers formed with the dual-surface adhesive tape with a sheet substrate. Such a dual-surface adhesive tape is often provided with a release paper in order to prevent adhesion between the adhesive layers and the substrate before use. Although it is necessary to peel off the release paper at the time of use, the operation to peel off the release paper takes time, and there was the problem that the release paper after peeling off generates waste. Therefore, as an adhesive sheet that does not use a release paper, sheets having adhesive layers that are fused by heat (Patent Document 3) and sheets in which adhesive layers are bonded to each other with pressure-sensitive adhesives (Patent Documents 4, 5 and 7) are known. Among further prior art, Patent Document 6 discloses an adhesive tape comprising a polyvinyl chloride film and an adhesive layer arranged on surface(s) of the polyvinyl chloride film. Moreover, Patent Document 8 discloses a pressure-sensitive adhesive sheet including a vinyl chloride resin sheet and a layer of an adhesive laminated on the surface of the vinyl chloride resin sheet. Moreover, Patent Document 9 discloses a wiring harness sheet including a foam formed into a sheet, a film provided onto one of the front and back surfaces of the foam, and an adhesive layer provided onto another of the front and back surfaces of the foam.

### CITATION LIST

### PATENT LITERATURE

Patent Document 1: JP 2011-104840 A
Patent Document 2: JP 2013-168322 A
Patent Document 3: JP H11-7856 A
Patent Document 4: JP 2001-348547 A
Patent Document 5: JP 2016-056270 A
Patent Document 6: WPI AN 2016-62544 A
Patent Document 7: US 2002/053392 A1
Patent Document 8: JP 2010-037519 A
Patent Document 9: US 2017/148552 A1

### SUMMARY OF INVENTION

### TECHNICAL PROBLEM

However, in the method described in Patent Document 3, crimping work with a heat fusion machine arises, and the time for this work is long and mistakenly contacting the electric wires with a heat source can cause trouble such as the electric wires breaking. Further, in the methods described in Patent Documents 4 and 5, bonding at normal temperatures is possible, but in the method described in Patent Document 4, the adhesive sticks to the hands of workers or to other electric wires, causing problems with working properties. In addition, with the method described in Patent Document 5, the adhesive force between the adhesive layers is insufficient, and there is a concern that peeling after bundling of the electric wires may occur.

Additionally, the substrate must have electrical insulative properties and flame retardance, while also having softness, for the purpose of bundling and protecting elongated articles such as wire harnesses. Thus, substrates comprising polyvinyl chloride and a plasticizer are primarily used. However, variations in the adhesive properties due to the plasticizer seeping from the substrate and transferring to the adhesive are considered to be problems.

### SOLUTION TO PROBLEM

That is, the adhesive sheet, the protective material, and the wire harness according to the present invention are as indicated in the claims.

### ADVANTAGEOUS EFFECTS OF INVENTION

The present invention makes it possible to provide an adhesive sheet capable of bonding adhesive layers together at normal temperatures, with little stickiness of the adhesive layers due to a plasticizer seeping out from the substrate, a protective material using this adhesive sheet, and a wire harness.

### DESCRIPTION OF EMBODIMENTS

An embodiment of the present invention shall be explained in detail below.

### [Adhesive Sheet]

The adhesive sheet according to the present embodiment (hereinafter referred to simply as "adhesive sheet") comprises a substrate and adhesive layers that are arranged on one surface of the substrate with a primer layer being interposed therebetween. "One surface" means a main surface of either the front or rear of the substrate having a sheet-like shape. That is, the adhesive sheet is such that the substrate, the primer layer, and the adhesive layers are formed in this order. This adhesive sheet comprises adhesive layers capable of bonding at normal temperatures, is superior in working properties because there is little sticking thereof to workers and electric wires, and does not peel easily when bundling the electric wires because the adhesive layers are strongly bonded.

### <Substrate>

The substrate must have electrical insulative properties and flame retardance, and also must have softness, for the purpose of bundling and protecting elongated articles such as wire harnesses. Thus, a vinyl halide-based resin (A) is used.

Examples of the vinyl halide-based resin (A) include a polyvinyl chloride-based resin (polyvinyl chloride, vinyl chloride-vinyl acetate copolymer, vinyl chloride-ethylene copolymer, vinyl chloride-propylene copolymer, etc.), a polyvinylidene chloride resin, a chlorinated polyolefin, a polyvinyl fluoride resin, and a polyvinylidene fluoride resin. These can be selected and used individually or two or more can be selected and used. Of these, polyvinyl chloride-based resins are preferable because they have softness and stretchability, are superior in molding workability, and are commonly used and are available at inexpensive prices.

The polyvinyl chloride-based resin may be a homopolymer comprising only a vinyl chloride monomer, or a copolymer obtained by copolymerizing other monomers such as ethylene and vinyl acetate as described above. In addition, the degree of polymerization of the polyvinyl chloride-based resin is not particularly limited, but particularly good workability can be obtained by using an average degree of polymerization of preferably 500-4000, more preferably 800-3000, and still more preferably 1000-2000.

The substrate essentially includes a plasticizer to impart softness, stretchability, and workability. Furthermore, the plasticizer must be a polyester-based plasticizer, which is a plasticizer having a high molecular weight, in order to prevent stickiness of the adhesive layer due to the plasticizer seeping out from the substrate. A polyester-based plasticizer is a polyester composed of a dibasic acid and a glycol. Examples of the dibasic acid include adipic acid, azelaic aid, sebacic acid, and phthalic acid. Examples of the glycol include 1,2-propylene glycol, 1,3-butanediol, 1,6-hexanediol, and the like. In addition, examples of a sequestering agent for forming both terminals of the polyester include a higher alcohol such as 2-ethyl hexanol, a higher fatty acid such as lauric acid, and the like. Examples of such polyester-based plasticizers include D-623, D-625, D-643, D-645, and D-653, manufactured by Mitsubishi Chemical Corporation, W-2600, W-2300, W-305ELS, W-2365, W-2610, W-2310, and W-4000, manufactured by DIC Corporation, PN-7160, PN-1030, P-300, PN-650, PN-260, PN-400, PN-250, PN-446, PN-350, and PN-280, manufactured by Adeka Corporation. Of these polyester-based plasticizers, adipic acid-based and phthalic acid-based polyester-based plasticizers are preferable, and adipic acid-based polyester-based plasticizers, which can be prepared with relatively high molecular weights, and which have little seepage from the substrate, are more preferable.

The weight-average molecular weight of the polyester-based plasticizer (B) in the substrate is preferably 600-6000, more preferably 1000-6000, still more preferably 1200-2800, and particularly preferably 1500-2500. If the weight-average molecular weight is more than 6000, the softness and stretchability become lower, and when the electric wire groups are covered, there is a possibility that the flexibility of the electric wire groups will become lower. If the weight-average molecular weight is less than 600, the adhesive becomes sticky due to the plasticizer seeping out from the substrate to the adhesive layer, thereby worsening the working properties. The weight-average molecular weight refers to the weight-average molecular weight determined on the basis of "molecular weight analysis by gel permeation chromatography (GPC)". The abovementioned molecular weight analysis of the solution sample by GPC involves appropriately adjusting the concentration so that there is 0.1-10 mL of a solvent medium with respect to 1 mg of a solid sample, and using this as the sample to be analyzed. The sample to be analyzed is filtered with a suitable filter (for example, a membrane filter having an average hole diameter of approximately 0.45 µm) and injected into a device. Due to this analysis, it is possible to compute the molecular weight of a peak that has appeared in a chromatogram as a standard polystyrene conversion value.

The viscosity at 25°C of the polyester-based plasticizer (B) in the substrate is preferably 200-7000 mPa·s, more preferably 200-6000 mPa·s, and still more preferably 2000-5000 mPa·s. If the viscosity is more than 7000 mPa·s, the softness and stretchability become lower, and when the electric wire groups are covered, there is a possibility that the flexibility of the electric wire groups will become lower. If the viscosity is less than 200 mPa·s, the adhesive becomes sticky due to the plasticizer seeping out from the substrate to the adhesive layer, and the working properties are worsened.

Concerning the included amount of the polyester-based plasticizer (B) in the substrate, 20-100 parts by mass, preferably 30-80 parts by mass, and more preferably 40-60 parts by mass are included with respect to 100 parts by mass of the vinyl halide-based resin (A). If the included amount of the polyester-based plasticizer (B) is more than 100 parts by mass, the adhesive becomes sticky due to the plasticizer seeping out from the substrate to the adhesive layer, and there is a possibility that the working properties will be worsened. If the included amount of the polyester-based plasticizer (B) is less than 20 parts by mass, the softness and stretchability become lower, and when the electric wire groups are covered, there is a possibility that the flexibility of the electric wire groups will become lower.

In the substrate, as needed and without hindering the effects of the present invention, it is possible to blend an inorganic filler, a reforming agent, and other additives or the like. Examples of such other additives include a coloring agent, a stabilizer, an anti-oxidation agent, an ultraviolet light absorbing agent, a glidant, and the like.

Examples of the inorganic filler include aluminum hydroxide, magnesium hydroxide, a zirconium hydroxide, calcium hydroxide, potassium hydroxide, a barium hydroxide, triphenyl phosphate, an ammonium polyphosphate, a polyphosphoric acid amide, zirconium oxide, magnesium oxide, zinc oxide, a titanium oxide, molybdenum oxide, guanidine phosphate, hydrotalcite, smectite, a zinc borate, an anhydrous zinc borate, a zinc metaborate, a barium metaborate, an antimony oxide, antimony trioxide, antimony pentaoxide, red phosphorus, talc, alumina, silica, boehmite, bentonite, sodium silicate, calcium silicate, calcium sulfate, calcium carbonate, magnesium carbonate, and carbon black, and these can be selected and used individually or two or more can be selected and used. Preferably, talc, alumina, silica, calcium silicate, calcium sulfate, calcium carbonate, or magnesium carbonate is employed, and more preferably, calcium carbonate, which has superior economic performance, is employed.

The inorganic filler can be obtained by pulverizing a natural product or may be one obtained by neutralizing and precipitating an aqueous solution or the like. In addition, it is also possible to introduce a functional group with a surface treatment agent or the like. As the surface treatment agent, a fatty acid, a rosin acid, a lignin acid, a quaternary ammonium salt, or the like can be used.

Examples of the reforming agent include, for example, a vinyl chloride-vinyl acetate copolymer, a vinyl chloride-ethylene copolymer, a vinyl chloride-propylene copolymer, a chlorinated polyethylene, a chlorinated polyvinyl chloride, an ethylene-vinyl acetate copolymer, an acrylonitrile-butadiene-styrene copolymer, a methyl methacrylate-butadiene-styrene copolymer, an acrylonitrile-butadiene copolymer, a methyl methacrylate-butyl acrylate copolymer, a thermoplastic polyurethane, and a polyester-based thermoplastic elastomer, and the like. These can be selected and used individually or two or more can be selected and used.

The included amounts of the inorganic filler, the reforming agent, and the other additives are not particularly limited, and they may be included within a range not hindering the effects of the present invention. For example, it is possible to set this at an amount exceeding 0 parts by mass and 50 parts by mass or less with respect to 100 parts by mass of the abovementioned resin.

The formation method of the substrate makes it possible to obtain a composition by mixing the resin, the plasticizer, the inorganic filler, a thermal stabilizer, a light absorbing agent, a pigment, and other additives and the like by melt kneading. While the melt kneading method is not particularly limited, various mixers and kneaders such as a twin-screw extruder, continuous and batch kneaders, rolls, and a Banbury mixer, equipped with a heating device, can be used, and the compositions are mixed to disperse uniformly, and the resulting mixture is molded into the substrate with a calender method, a T-die method, an inflation method, or the like, these being conventional molding methods. The molding machine is preferably a calender molding machine from the viewpoints of productivity, color change, and uniformity of shape. As a roll arrangement method in calender molding, for example, a known type such as an L-type, an inverted L-type, or a Z-type can be adopted, and further, the roll temperature is normally set at 150°C-200°C, and preferably at 155°C-190°C.

There is a variety of thicknesses of the substrate that is possible in accordance with the purpose of use and the application thereof, and preferably is 30-2000 µm, more preferably 100-1000 µm, and even more preferably 200-500 µm.

### <Adhesive Layers>

Concerning the adhesive layers, after bonding the adhesive layers together, by applying slight pressure by pressing with one's hand, the adhesive layers self-adhere to each other as a pressure-sensitive adhesive, but they need to be designed so that the stickiness (tack) of the adhesive layers themselves is low.

The adhesive layers essentially contain an elastomer (C). By containing the elastomer (C), there is no sticking to elongated articles such as electric wires used in wire harnesses, and the adhesive layers can be strongly adhered after bonding the adhesive surfaces to each other, in addition to which increased tack due to the plasticizer seeping out from the substrate does not easily occur. Additionally, by including a tackifier in the adhesive layers, it is possible to impart adhesiveness to the elastomer, and to make the adhesive surfaces self-adhere to each other by pressing the adhesive surfaces with one's hand.

The adhesive force between the adhesive layers in the adhesive sheet is essentially 1.5 N or higher, more preferably 3 N or higher, and still more preferably 5 N or higher at a width of 15 mm. If the adhesive force is less than 1.5 N, peeling occurs when bundling or protecting elongated articles such as electric wires, and it is not possible to obtain satisfactory performance as a protective material. Additionally, the probe tack of the adhesive layers is essentially 7 N/cm² or lower, more preferably 5 N/cm² or lower, and still more preferably 3 N/cm² or lower. If the probe tack is more than 7 N/cm², sticking to an elongated article occurs when bundling or protecting elongated articles such as electric wires, and a drop in the working efficiency occurs.

The adhesive force between the adhesive layers and the probe tack are values measured by the methods indicated below.

### <Adhesive force between the adhesive layers (adhesive force between adhesive surfaces)>

Two test pieces 15 mm wide × 120 mm long were prepared, the adhesive layers of the test pieces were bonded together in an area of 15 mm × 100 mm under an environment of 23°C, and after one cycle of 5 mm per second with a pressure roller having a load of 2 kg, the test pieces were left alone for 20 minutes. Next, the load at the time of peeling was measured for two test pieces at a peeling speed of 300 mm/min under an environment of 23°C. The peeling direction of the test pieces was set such that the angle formed by the two test pieces after peeling was 180°.

### <Tack (Probe Tack)>

In accordance with ASTM D 2979, using a probe tack tester (NS PROBE TACK TESTER, manufactured by Nichiban Co., Ltd.), a cylindrical probe with a diameter of 5 mm was brought into contact with the test pieces at a speed of 1 cm/s under a 23°C environment and then, the load at the time of peeling off at a speed of 1 cm/s was measured.

Examples of the elastomer (C) include a natural rubber or a synthetic rubber, a thermoplastic elastomer, and the like.

Specific examples of the natural rubber include common unmodified natural rubber, natural rubber graft-copolymerized with other monomers such as styrene, acrylonitrile, and methyl methacrylate, natural rubber crosslinked with a sulfur-based compound, an organic peroxide-based compound, or the like, and natural rubber depolymerized by mastication, organic peroxide agent treatment, or the like. Also, that which remains after removing impurities with centrifugal separation or a deproteinization agent treatment of latex may be used.

Specific examples of the synthetic rubber include butadiene rubber, isoprene rubber, styrene-butadiene rubber, acrylonitrile-butadiene rubber, methyl methacrylate-butadiene rubber, isobutylene rubber (butyl rubber), chloroprene rubber, acrylic rubber, urethane rubber, and the like.

Specific examples of the thermoplastic elastomer include ethylene-propylene rubber, ethylene-propylene-diene rubber, a styrene-butadiene-styrene block copolymer, a styrene-isoprene-styrene block copolymer, a styrene-ethylene-styrene copolymer, a styrene-ethylene-butadiene-styrene copolymer, and a styrene-ethylene-propylene-styrene copolymer.

The adhesive layer may contain a tackifier (D) as needed. An adhesive layer containing a suitable amount of a tackifier can have increased adhesiveness. As the aforementioned tackifier (D), it is possible to use a known tackifier having a softening point of 95°C or higher, measured by the ring-and-ball method. Examples include, for example, a rosin resin and a hydrogenated rosin resin, a rosin ester resin, a rosin-modified phenol resin, a phenol resin, an alkylphenol resin, a terpene resin, a terpene phenol resin, a coumarone resin, an indene resin, a coumarone-indene resin, a coumarone-indene-styrene resin, a styrene resin, a xylene resin, a styrene-maleic acid resin, an aliphatic petroleum resin, an alicyclic petroleum resin, an aromatic petroleum resin, an aliphatic/aromatic copolymer petroleum resin, and the like. These can be selected and used individually or two or more can be selected and used. A rosin ester resin, a rosin-modified phenol resin, an alkylphenol resin, a terpene phenol resin, a coumarone resin, a coumarone-indene resin, or a styrene resin is preferable, and a rosin ester resin, a rosin-modified phenol resin, or a terpene phenol resin is particularly preferable. The included amount of the tackifier (D) is 0-250 parts by mass, preferably 5-150 parts by mass, and more preferably 50-100 parts by mass with respect to 100 parts by mass of the elastomer (C).

The aforementioned adhesive layers include inorganic microparticles (E) as needed. The adhesive layers including a suitable amount of inorganic microparticles can lighten the stickiness while maintaining adhesive properties. According to the invention, the aforementioned inorganic microparticles (E) are selected from the group, consisting of silica, and calcium carbonate, which are superior in workability and safety, and calcium carbonate, which also has superior economic performance, is more preferable. The microparticles may be used individually or two or more types thereof can be combined and used. The included amount of the inorganic microparticles (E) is 5-150 parts by mass, and preferably 50-100 parts by mass with respect to 100 parts by mass of the elastomer (C).

The average particle size of the aforementioned microparticles is 0.08-20 µm, preferably 0.3-10 µm, and more preferably 0.5-5 µm. By setting the average particle size at 0.08 µm or more, it is possible to sufficiently obtain the blocking resistance property effects engendered by the microparticles, reducing the likelihood of occurrence of adhesion to the substrate surface. By setting the average particle size at 20 µm or less, the microparticles can suppress the hindrance of the bonding of the adhesive layers to one another and it is possible to sufficiently express selfadhesive force. The average particle size means the average primary particle size, is a value measured by a laser diffraction/scattering type particle size distribution measurement method, and is a 50% integrated particle size in volume-based particle size distribution.

The aforementioned adhesive layer can include a plasticizer, a surfactant, a viscosity modifier, an anti-aging agent, and other additives insofar as adhesive performance is not hindered. The included amount of these additives in the adhesive is not particularly limited and is preferably 50 parts by mass or less with respect to 100 parts by mass of the elastomer (C).

The formation method of the adhesive layers involves applying an adhesive solution, emulsion, or dispersion in which, for example, a tackifier, a filler such as inorganic microparticles, a plasticizer, a surfactant, a viscosity modifier, an anti-aging agent, and other additives are mixed and which include the elastomer, on one surface of the substrate with the primer layer interposed therebetween, drying in a drying furnace, and thereafter obtaining said adhesive layers in a rolled form by means of a roll-up method. Examples of the application method include a forward-rotation roll method, a reverse roll method, a gravure roll method, a spray method, a kiss roll method, a bar method, a knife method, a comma method, a lip die method, and the like. In addition, as an embodiment of the abovementioned adhesive, from the viewpoint of safety and the environmental load, using an emulsion or dispersion with water is preferable.

The thickness of the adhesive layers, from the viewpoints of expressing the adhesive force and maintaining the structure of the adhesive layers, is preferably 5-100 µm and more preferably 10-50 µm. By setting the thickness of the adhesive layers to 5 µm or more, it is possible to sufficiently express the adhesive force. In addition, by setting the thickness of the adhesive layers to 100 µm or less, it is possible to sufficiently maintain the structure of the adhesive layers, so when peeling the sheet from the rolled object and employing the sheet, the occurrence of the phenomenon of the adhesive layers moving to the other substrate surface, so-called glue transfer, can be prevented.

### <Primer Layer>

The adhesive sheet is provided with a primer layer between the substrate and the adhesive layers in order to increase the adhesion between the substrate and the adhesive layers.

Examples of the primer forming the primer layer include natural rubber, natural rubber grafted with other monomers such as styrene, acrylonitrile, and methyl methacrylate, butadiene rubber, isoprene rubber, styrene-butadiene rubber, acrylonitrile-butadiene rubber, methyl methacrylate-butadiene rubber, isobutylene rubber (butyl rubber), chloroprene rubber, thermoplastic elastomers (for example, ethylene-propylene rubber, ethylene-propylene-diene rubber, a styrene-butadiene-styrene block copolymer, a styrene-isoprene-styrene block copolymer, a styrene-ethylene-styrene copolymer, a styrene-ethylene-butadiene-styrene copolymer, and a styrene-ethylene-propylene-styrene copolymer), acrylic rubber, and urethane rubber, and these can be selected based on their properties for adhesion with the substrate and the adhesive layers.

Of these, from the superiority in compatibility with adhesives including natural rubber, the inclusion of natural rubber grafted with other monomers such as styrene, acrylonitrile, and methyl methacrylate, styrene-butadiene rubber, acrylonitrile-butadiene rubber, and methyl methacrylate-butadiene rubber is preferable, and the inclusion of acrylonitrile-butadiene rubber is particularly preferable.

The primer layer can include additives such as a surfactant, a viscosity modifier, an anti-aging agent, a plasticizer, and a filler insofar as the effects of the present invention are not hindered. When including additives, the included amount thereof is not particularly limited and can be set at an amount of 50 mass% or less in the primer layer.

A conventionally known method can be used as the method for forming the primer layer, and for example, on one surface of the substrate, the primer layer can be formed by means of an application method such as a forward-rotation roll method, a reverse roll method, a gravure roll method, a spray method, a kiss roll method, a bar method, a knife method, a comma method, and a lip die method.

The thickness of the primer layer is preferably 0.01-10 µm and more preferably 0.1-1 µm from the viewpoints of expressing the force for bonding the substrate and the adhesive layers, so-called anchoring properties, and maintaining the structure of the primer layer.

Concerning the adhesive sheet, a back-surface treatment layer may be provided on the surface of the substrate opposite to an adhesive layer in order to reduce the adhesion between the adhesive layers and the substrate of another adhesive sheet. The back-surface treatment layer can be formed by using polypropylene (PP), high-density polyethylene (HDPE), low-density polyethylene (LDPE), linear low-density polyethylene (LLDPE), an ethylene-propylene copolymer, polyacrylic ester, polymethacrylate, polyvinyl alcohol (PVA), an ethylene-vinyl alcohol copolymer, polyethylene glycol (PEG), polypropylene glycol (PPG), an ethylene glycol-propylene glycol copolymer, polydimethylsiloxane (PDMS), or the like.

### <Adhesive Sheet>

The adhesive sheet preferably has a 100% tensile modulus of 50 MPa or less, more preferably 5-40 MPa, and still more preferably 10-30 MPa as determined in accordance with JIS K 6251. When it is higher than 50 MPa, deformation of the substrate is less likely to occur when the sheet is fed out, and when the electric wire groups are covered, the flexibility of the electric wire groups is lowered.

The adhesive sheet preferably has a tensile breaking strength of 10 MPa or higher, more preferably 15-50 MPa, and still more preferably 20-40 MPa as determined in accordance with JIS K 6251. When it is lower than 10 MPa, there is a possibility that, after being bundled with elongated articles such as electric wires, the sheet will tear due to strain when the elongated articles are bent.

The adhesive sheet preferably has a tensile breaking elongation of 50% or higher, more preferably 100-300%, and still more preferably 150-250% as determined in accordance with JIS K 6251. When it is lower than 50%, there is a possibility that, after being bundled with elongated articles such as electric wires, the sheet will tear due to strain when the elongated articles are bent.

The adhesive sheet preferably has a volume resistivity of 1 × 10¹⁰ Ω·cm or more, more preferably 1 × 10¹¹ Ω·cm or more, and even more preferably 1 × 10¹² Ω·cm or more. If the volume resistivity is less than the above value, if the electric wire covering peels or the like after bundling the electric wires, there is the risk of electric conduction or insulation breakdown. The volume resistivity is a value measured in accordance with JIS K 6271.

The adhesive sheet is such that the adhesive force between the adhesive layers and the substrate having a width of 15 mm is 0-1.5 N, more preferably 0-1 N, and even more preferably 0-0.5 N. Due to the adhesive force of the adhesive layers and the substrate being 1.5 N or less, blocking does not tend to occur, even when the adhesive sheet is stored by stacking multiple sheets, and the work of bundling the adhesive sheet with elongated articles such as electric wires becomes easier.

### [Articles]

The abovementioned adhesive sheet can be preferably used as a protective material of elongated articles. The articles according to the present embodiment are formed using the abovementioned adhesive sheet and are protective adhesive sheets which are for elongated articles and which comprise the adhesive sheet. An electric wire bundle can be provided as an example of the elongated articles. It is possible to form a wire harness by bundling the electric wire bundle by using the adhesive sheet according to the present embodiment.

### EXAMPLES

Examples and comparative examples more specifically explain the present invention below.

### [Example 1]

### (Manufacturing of the substrate)

A substrate having a thickness of 0.4 mm was obtained by blending, with respect to 100 parts by mass of polyvinyl chloride (TH-1000, manufactured by Taiyo Vinyl Corporation), as the vinyl halide resin (A), 40 parts by mass of polyester adipate PN-7160, molecular weight 1000, viscosity 220 mPa·s (manufactured by Adeka Corporation), as the polyester-based plasticizer (B), a stabilizer, and a glidant, and then kneading and mixing for ten minutes with a twin-roll at a roll temperature of 165°C.

### (Manufacturing of the emulsion adhesive)

An emulsion adhesive having a solid content of 55 mass% was obtained by blending, with respect to 100 parts by mass of a natural rubber emulsion (HA LATEX, manufactured by Regitex Co., Ltd.) as the elastomer (C), 50 parts by mass of terpene phenol (E200, manufactured byArakawa Chemical Industries, Ltd.) having a softening point of 150°C as the tackifier (D), and 50 parts by mass of a heavy calcium carbonate slurry (FMT65, manufactured by Fimatec Ltd.) having a particle size of 1.65 µm as the inorganic microparticles (E), and stirring by using a stirrer.

### (Manufacturing of the adhesive sheet)

On the surface of the abovementioned substrate, an NBR-based primer (KT4612A, manufactured by E-TEC Co., Ltd.) was applied and then, by drying for one minute at 100°C, a primer layer having a thickness of 0.3 µm was formed on the surface of the substrate. Next, the emulsion adhesive was applied on the surface of the primer layer and then, by drying for one minute at 100°C using an oven, an adhesive sheet having a three-layered structure of a 0.4 mm-thick substrate/0.3 µm-thick primer layer/30 µm-thick adhesive layer was obtained. The blend used in example 1 is shown in Table 1.

### [Example 2]

An adhesive sheet was obtained with a method the same as that of example 1 except that the polyester-based plasticizer (B) in example 1 was changed to polyester adipate PN-1030, molecular weight 2000, viscosity 1000 mPa·s (manufactured by Adeka Corporation). The blend used in example 2 is shown in Table 1.

### [Example 3]

An adhesive sheet was obtained with a method the same as that of example 2 except that the the parts by mass of the polyester adipate, molecular weight 2000, viscosity 1000 mPa·s (manufactured by Adeka Corporation) in example 2 was changed to 30 parts by mass. The blend used in example 3 is shown in Table 1.

### [Example 4]

An adhesive sheet was obtained with a method the same as that of example 2 except that the the parts by mass of the polyester adipate, molecular weight 2000, viscosity 1000 mPa·s (manufactured by Adeka Corporation) in example 2 was changed to 60 parts by mass. The blend used in example 4 is shown in Table 1.

### [Example 5]

An adhesive sheet was obtained with a method the same as that of example 2 except that the the parts by mass of the polyester adipate, molecular weight 2000, viscosity 1000 mPa·s (manufactured by Adeka Corporation) in example 2 was changed to 90 parts by mass. The blend used in example 5 is shown in Table 1.

### [Example 6]

An adhesive sheet was obtained with a method the same as that of example 1 except that the polyester-based plasticizer (B) in example 1 was changed to polyester adipate P-300, molecular weight 3000, viscosity 1500 mPa·s (manufactured by Adeka Corporation). The blend used in example 6 is shown in Table 1.

### [Example 7]

An adhesive sheet was obtained with a method the same as that of example 1 except that the polyester-based plasticizer (B) in example 1 was changed to polyester adipate W-2300, molecular weight 3000, viscosity 1500 mPa·s (manufactured by Adeka Corporation). The blend used in example 7 is shown in Table 1.

### [Example 8]

An adhesive sheet was obtained with a method the same as that of example 1 except that the polyester-based plasticizer (B) in example 1 was changed to polyester adipate W-40100, molecular weight 6000, viscosity 2600 mPa·s (manufactured by Adeka Corporation). The blend used in example 8 is shown in Table 1.

### [Example 9]

An adhesive sheet was obtained with a method the same as that of example 1 except that the polyester-based plasticizer (B) in example 1 was changed to polyester phthalate D671N, molecular weight 650, viscosity 210 mPa·s (manufactured by J-Plus Co., Ltd.). The blend used in example 9 is shown in Table 1.

### [Reference Example 10]

An adhesive sheet was obtained with a method the same as that of example 2 except that the tackifier (D) in example 2 was changed to 100 parts by mass of terpene phenol (E200, manufactured by Arakawa Chemical Industries, Ltd.) having a softening point of 150°C, and the inorganic microparticles (E) were not used. The blend used in example 10 is shown in Table 2.

### [Reference Example 11]

An adhesive sheet was obtained with a method the same as that of example 2 except that the tackifier (D) in example 2 was changed to 100 parts by mass of rosin ester (SK323NS, manufactured by Harima Chemicals, Inc.) having a softening point of 120°C, and the inorganic microparticles (E) were not used. The blend used in example 11 is shown in Table 2.

### [Reference Example 12]

An adhesive sheet was obtained with a method the same as that of example 2 except that the tackifier (D) in example 2 was changed to 100 parts by mass of terpene phenol (Silvares TP96, manufactured by Arizona Chemical) having a softening point of 96°C, and the inorganic microparticles (E) were not used. The blend used in example 12 is shown in Table 2.

### [Example 13]

An adhesive sheet was obtained with a method the same as that of example 2 except that the inorganic microparticles (E) in example 2 were changed to 100 parts by mass of a heavy calcium carbonate slurry (FMT65, manufactured by Fimatec Ltd.) having a particle size of 1.6 µm, and the tackifier (D) was not used. The blend used in example 13 is shown in Table 2.

### [Example 14]

An adhesive sheet was obtained with a method the same as that of example 2 except that the inorganic microparticles (E) in example 2 were changed to 100 parts by mass of colloidal calcium carbonate (Neolight SP, manufactured by Takehara Kagaku Kogyo Co., Ltd.) having a particle size of 0.08 µm, and the tackifier (D) was not used. The blend used in example 14 is shown in Table 2.

### [Example 15]

An adhesive sheet was obtained with a method the same as that of example 2 except that the inorganic microparticles (E) in example 2 were changed to 100 parts by mass of colloidal silica (ST-XS, manufactured by Nissan Chemical Corp.) having a particle size of 2-4 µm, and the tackifier (D) was not used. The blend used in example 15 is shown in Table 2.

### [Reference Example 16]

An adhesive sheet was obtained with a method the same as that of example 2 except that the elastomer (C) in example 2 was changed to 100 parts by mass of styrene-butadiene rubber (Zepol LX430, manufactured by Zeon Corp.), the tackifier (D) was changed to 100 parts by mass of terpene phenol (E200, manufactured by Arakawa Chemical Industries, Ltd.) having a softening point of 150°C, and the inorganic microparticles (E) were not used. The blend used in example 16 is shown in Table 2.

### [Reference Example 17]

An adhesive sheet was obtained with a method the same as that of example 2 except that the elastomer (C) in example 2 was changed to 100 parts by mass of styrene-isoprene-styrene rubber (Quintac 3270, manufactured by Zeon Corp.), the tackifier (D) was changed to 100 parts by mass of terpene phenol (E200, manufactured by Arakawa Chemical Industries, Ltd.) having a softening point of 150°C, and the inorganic microparticles (E) were not used. The blend used in example 17 is shown in Table 2.

### [Reference Example 18]

An adhesive sheet was obtained with a method the same as that of example 2 except that the tackifier (D) and the inorganic microparticles (E) in example 2 were not used. The blend used in example 18 is shown in Table 2.

### [Example 19]

An adhesive sheet was obtained with a method the same as that of example 2 except that the tackifier (D) in example 2 was changed to 100 parts by mass of terpene phenol (E200, manufactured by Arakawa Chemical Industries, Ltd.) having a softening point of 150°C, and the inorganic microparticles (E) were changed to 100 parts by mass of a heavy calcium carbonate slurry (FMT65, manufactured by Fimatec Ltd.) having a particle size of 1.6 µm. The blend used in example 19 is shown in Table 3.

### [Example 20]

An adhesive sheet was obtained with a method the same as that of example 2 except that the tackifier (D) in example 2 was changed to 160 parts by mass of terpene phenol (E200, manufactured by Arakawa Chemical Industries, Ltd.) having a softening point of 150°C, and the inorganic microparticles (E) were changed to 160 parts by mass of a heavy calcium carbonate slurry (FMT65, manufactured by Fimatec Ltd.) having a particle size of 1.6 µm. The blend used in example 20 is shown in Table 3.

### [Reference Example 21]

An adhesive sheet was obtained with a method the same as that of example 2 except that the inorganic microparticles (E) in example 2 were not used. The blend used in example 21 is shown in Table 3.

### [Reference Example 22]

An adhesive sheet was obtained with a method the same as that of example 2 except that the tackifier (D) in example 2 was changed to 200 parts by mass of terpene phenol (E200, manufactured by Arakawa Chemical Industries, Ltd.) having a softening point of 150°C, and the inorganic microparticles (E) were not used. The blend used in example 22 is shown in Table 3.

### [Example 23]

An adhesive sheet was obtained with a method the same as that of example 2 except that the tackifier (D) in example 2 was not used. The blend used in example 23 is shown in Table 3.

### [Example 24]

An adhesive sheet was obtained with a method the same as that of example 2 except that the inorganic microparticles (E) in example 2 were changed to 200 parts by mass of a heavy calcium carbonate slurry (FMT65, manufactured by Fimatec Ltd.) having a particle size of 1.6 µm, and the tackifier (D) was not used. The blend used in example 24 is shown in Table 3.

### [Example 25]

An adhesive sheet was obtained with a method the same as that of example 2 except that the tackifier (D) in example 2 was changed to 200 parts by mass of terpene phenol (E200, manufactured by Arakawa Chemical Industries, Ltd.) having a softening point of 150°C. The blend used in example 25 is shown in Table 3.

### [Example 26]

An adhesive sheet was obtained with a method the same as that of example 2 except that the inorganic microparticles (E) in example 2 were changed to 200 parts by mass of a heavy calcium carbonate slurry (FMT65, manufactured by Fimatec Ltd.) having a particle size of 1.6 µm. The blend used in example 26 is shown in Table 3.

### [Comparative example 1]

An adhesive sheet was obtained with a method the same as that of example 1 except that the included amount of the polyester-based plasticizer (B) in example 1 was changed to 10 parts by mass, the included amount of the tackifier (D) was changed to 100 parts by mass, and the inorganic microparticles (E) were not used. The blend used in comparative example 1 is shown in Table 4.

### [Comparative example 2]

An adhesive sheet was obtained with a method the same as that of comparative example 1 except that the polyester-based plasticizer (B) in comparative example 1 was changed to polyester adipate PN-1030, molecular weight 2000, viscosity 1000 mPa·s (manufactured by Adeka Corporation). The blend used in comparative example 2 is shown in Table 4.

### [Comparative example 3]

An adhesive sheet was obtained with a method the same as that of comparative example 2 except that the included amount of the polyester-based plasticizer (B) in comparative example 2 was changed to 110 parts by mass. The blend used in comparative example 3 is shown in Table 4.

### [Comparative example 4]

An adhesive sheet was obtained with a method the same as that of comparative example 1 except that the polyester-based plasticizer (B) in comparative example 1 was changed to polyester adipate PN-300, molecular weight 3000, viscosity 1500 mPa·s (manufactured byAdeka Corporation). The blend used in comparative example 4 is shown in Table 4.

### [Comparative example 5]

An adhesive sheet was obtained with a method the same as that of example 1 except that the polyester-based plasticizer (B) in example 1 was changed to 40 parts by mass of diisononyl phthalate DINP, molecular weight 419, viscosity 190 mPa·s (manufactured by J-Plus Co., Ltd.). The blend used in comparative example 5 is shown in Table 4.

### [Comparative example 6]

An adhesive sheet was obtained with a method the same as that of example 2 except that a natural rubber emulsion (HA LATEX, manufactured by Regitex Co., Ltd.), terpene phenol (E200, manufactured by Arakawa Chemical Industries, Ltd.), and a heavy calcium carbonate slurry (particle size 1.65 µm, FMT65, manufactured by Fimatec Ltd.) were blended, and 200 parts by mass of the tackifier (D) and 200 parts by mass of the inorganic microparticles (E) were blended with respect to 100 parts by mass of natural rubber. The blend used in comparative example 6 is shown in Table 4.

### [Comparative example 7]

An adhesive sheet was obtained with a method the same as that of example 2 except that a natural rubber emulsion (HA LATEX, manufactured by Regitex Co., Ltd.), terpene phenol (E200, manufactured by Arakawa Chemical Industries, Ltd.), and a heavy calcium carbonate slurry (particle size 1.65 µm, FMT65, manufactured by Fimatec Ltd.) were blended, and 300 parts by mass of the tackifier (D) and 0 parts by mass of the inorganic microparticles (E) were blended with respect to 100 parts by mass of natural rubber. The blend used in comparative example 7 is shown in Table 4.

### [Comparative example 8]

An adhesive sheet was obtained with a method the same as that of example 2 except that a natural rubber emulsion (HA LATEX, manufactured by Regitex Co., Ltd.), terpene phenol (E200, manufactured by Arakawa Chemical Industries, Ltd.), and a heavy calcium carbonate slurry (particle size 1.65 µm, FMT65, manufactured by Fimatec Ltd.) were blended, and 0 parts by mass of the tackifier and 300 parts by mass of the inorganic microparticles were blended with respect to 100 parts by mass of natural rubber. The blend used in comparative example 8 is shown in Table 4.

### [Evaluation]

Test pieces necessary for each evaluation were cut out from the abovementioned adhesive sheets and the following physical properties were evaluated.

The evaluation methods are indicated in <Adhesive force between the adhesive surfaces>, <Probe tack>, <Tensile breaking elongation> and <100% tensile modulus>.

### <Physical properties at normal temperatures (probe tack)>

In accordance with ASTM D 2979, using a probe tack tester (NS PROBE TACK TESTER, manufactured by Nichiban Co., Ltd.), a cylindrical probe with a diameter of 5 mm was brought into contact with the test pieces at a speed of 1 cm/s under a 23°C environment and then, the loads at the time of peeling off at a speed of 1 cm/s were measured with n = 5, and the average values were recorded in Tables 1-4. A value of 7 N/cm² or lower was considered to be good.

### <Physical properties at normal temperatures (adhesive force between the adhesive surfaces)>

Two test pieces 15 mm wide × 120 mm long were prepared, the adhesive layers of the test pieces were bonded together in an area of 15 mm × 100 mm under an environment of 23°C, and after one cycle of 5 mm per second with a pressure roller having a load of 2 kg, the test pieces were left alone for 20 minutes. Next, the load at the time of peeling was measured for two test pieces at a peeling speed of 300 mm/min under an environment of 23°C. The peeling direction of the test pieces was set such that the angle formed by the two test pieces after peeling was 180°, the measurements were made with n = 3, and the average values were recorded in Tables 1-4. A value of 1.5 N or higher was considered to be good.

### <Heat resistance evaluation (probe tack)>

Samples were prepared by leaving adhesive sheets in a 70°C, 90% RH environment for 3 days, then removing the samples, and leaving the samples for 2 hours in a 23°C atmosphere. In accordance with ASTM D 2979, using a probe tack tester (NS PROBE TACK TESTER, manufactured by Nichiban Co., Ltd.), a cylindrical probe with a diameter of 5 mm was brought into contact with the obtained samples at a speed of 1 cm/s under a 23°C environment and then, the loads at the time of peeling off at a speed of 1 cm/s were measured with n = 5, and the average values were recorded in Tables 1-4. A value of 7 N/cm² or lower was considered to be good.

### <Heat resistance evaluation (adhesive force between the adhesive surfaces)>

Samples were prepared by leaving adhesive sheets in a 70°C, 90% RH environment for 3 days, then removing the samples, and leaving the samples for 2 hours in a 23°C atmosphere. Two test pieces 15 mm wide × 120 mm long were cut out from the obtained samples, the adhesive layers of the test pieces were bonded together in an area of 15 mm × 100 mm under an environment of 23°C, and after one cycle of 5 mm per second with a pressure roller having a load of 2 kg, the test pieces were left alone for 20 minutes. Next, the load at the time of peeling was measured for two test pieces at a peeling speed of 300 mm/min under an environment of 23°C. The peeling direction of the test pieces was set such that the angle formed by the two test pieces after peeling was 180°, the measurements were made with n = 3, and the average values were recorded in Tables 1-4. A value of 1.5 N or higher was considered to be good.

### <Tensile breaking elongation>

An adhesive sheet was measured for tensile breaking elongation in accordance with JIS K 6251, with n = 3, and the average value was recorded in Tables 1-4. A value of 100% or higher was considered to be good.

### <100% tensile modulus>

An adhesive sheet was measured for 100% tensile modulus in accordance with JIS K 6251, with n = 3, and the average value was recorded in Tables 1-4. A value of 30 MPa or lower was considered to be good.

**Table 1**

| | | | | | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|---|---|
| Substrate | | | | | Sub. 1 | Sub. 2 | Sub. 3 | Sub. 4 | Sub. 5 | Sub. 6 | Sub. 7 | Sub. 8 | Sub. 9 |
| Substrate Blend | Vinyl halide-based resin (A) | Polyvinyl chloride | TH-1000 | parts by mass | 100 | 100 | 100 | 100 | 100 | 100 | 100 | 100 | 100 |
| | Polyester-based plasticizer (B) | Polyester adipate (Mw 1000, viscosity 220) | PN-7160 | parts by mass | 40 | | | | | | | | |
| | | Polyester adipate (Mw 2000, viscosity 1000) | PN-1030 | parts by mass | | 40 | 30 | 60 | 90 | | | | |
| | | Polyester adipate (Mw 3000, viscosity 1500) | P-300 | parts by mass | | | | | | 40 | | | |
| | | Polyester adipate (Mw 3000, viscosity 1500) | W-2300 | parts by mass | | | | | | | 40 | | |
| | | Polyester adipate (Mw 6000, viscosity 2800) | W-4010 | parts by mass | | | | | | | | 40 | |
| | | Polyester phthalate (Mw 650, viscosity 210) | D671N | parts by mass | | | | | | | | | 40 |

| Adhesive | | | | | Adh. 1 | Adh. 1 | Adh. 1 | Adh. 1 | Adh. 1 | Adh. 1 | Adh. 1 | Adh. 1 | Adh. 1 |
|---|---|---|---|---|---|---|---|---|---|---|---|---|---|
| Adhesive Blend | Elastomer (C) | Natural rubber | HA LATEX | parts by mass | 100 | 100 | 100 | 100 | 100 | 100 | 100 | 100 | 100 |
| | | Styrene-butadiene rubber | Zepol LX430 | parts by mass | | | | | | | | | |
| | | Styrene-isoprene-styrene rubber | Quintac 3270 | parts by mass | | | | | | | | | |
| | Tackifier (D) | Terpene phenol (softening point 150°C) | Tamanol E200 | parts by mass | 50 | 50 | 50 | 50 | 50 | 50 | 50 | 50 | 50 |
| | | Rosin ester (softening point 120°C) | Hariester SK323NS | parts by mass | | | | | | | | | |
| | | Terpene phenol (softening point 96°C) | SILVARES TP96 | parts by mass | | | | | | | | | |
| | Inorganic microparticles (E) | Heavy calcium carbonate (particle size: 1.65 µm) | FMT65 | parts by mass | 50 | 50 | 50 | 50 | 50 | 50 | 50 | 50 | 50 |
| | | Colloidal calcium carbonate (particle size: 0.08 µm) | NEOLIGHT SP | parts by mass | | | | | | | | | |
| | | Colloidal silica (particle size: 2-4 µm) | Snowtex ST-XS | parts by mass | | | | | | | | | |
| Sheet properties | Adhesive prope rties | Probe tack | | N/cm² | 1.2 | 0.8 | 0.5 | 0.9 | 1.2 | 0.7 | 0.7 | 0.6 | 2.3 |
| | | Adhesive force | | N/15 mm | 16.2 | 7.6 | 5.3 | 9.5 | 8.8 | 7.5 | 7.2 | 5.4 | 4.0 |
| Evaluation | Heat resistance properties | Probe tack | | N/cm² | 6.7 | 2.5 | 1.4 | 1.6 | 2.1 | 2.4 | 2.3 | 2.7 | 4.2 |
| | | Adhesive force | | N/15 mm | 10.2 | 8.4 | 4.3 | 11.4 | 10.4 | 2.5 | 2.4 | 2.6 | 4.3 |
| | Mechanical properties | Tensile breaking elongation | | % | 277 | 253 | 236 | 292 | 322 | 215 | 211 | 190 | 292 |
| | | 100% tensile modulus | | MPa | 9 | 10 | 12 | 8 | 7 | 11 | 12 | 14 | 12 |

**Table 2**

| | | | | | Ex. 10 | Ex.11* | Ex. 12 * | Ex. 13 | Ex. 14 | Ex. 15 | Ex. 16 * | Ex. 17* | Ex.18* |
|---|---|---|---|---|---|---|---|---|---|---|---|---|---|
| Substrate | | | | | Sub. 2 | Sub. 2 | Sub. 2 | Sub 2 | Sub. 2 | Sub. 2 | Sub. 2 | Sub. 2 | Sub. 2 |
| Substrate Blend | Vinyl halide-based resin (A) | Polyvinyl chloride | TH-1000 | parts by mass | 100 | 100 | 100 | 100 | 100 | 100 | 100 | 100 | 100 |
| | Polyester-based plasticizer (8) | Polyester adipate (Mw 2000, viscosity 1000) | PN-1030 | parts by mass | 40 | 40 | 40 | 40 | 40 | 40 | 40 | 40 | 40 |

| Adhesive | | | | | Adh. 2 | Adh. 2 | Adh. 3 | Adh.4 | Adh. 5 | Adh. 6 | Adh. 7 | Adh. 8 | Adh. 9 |
|---|---|---|---|---|---|---|---|---|---|---|---|---|---|
| Adhesive Blend | Elastomer (C) | Natural rubber | HA LATEX | parts by mass | 100 | 100 | 100 | 100 | 100 | 100 | | | 100 |
| | | Styrene-butadiene rubber | Zepol L×430 | parts by mass | | | | | | | 100 | | |
| | | Styrene-isoprene-styrene rubber | Quintac 3270 | parts by mass | | | | | | | | 100 | |
| | Tackifier (D) | Terpene phenol (softening point 150°C) | Tamanol E200 | parts by mass | 100 | | | | | | 100 | 100 | |
| | | Rosin ester (softening point 120°C) | Hariester SK323NS | parts by mass | | 100 | | | | | | | |
| | | Terpene phenol (softening point 96°C) | SILVARES TP96 | parts by mass | | | 100 | | | | | | |
| | Inorganic microparticles (E) | Heavy calcium carbonate (particle size: 1.65 µm) | FMT65 | parts by mass | | | | 100 | | | | | |
| | | Colloidal calcium carbonate (particle size: 0.08 µm) | NEOLIGHT SP | parts by mass | | | | | 100 | | | | |
| | | Colloidal silica (particle size: 2-4 µm) | Snowtex ST-XS | parts by mass | | | | | | 100 | | | |
| Sheet properties | Adhesive properties | Probe tack | | N/cm² | 1.8 | 2.2 | 2.5 | 0.5 | 0.9 | 0.7 | 1.5 | 1.9 | 0.9 |
| | | Adhesive force | | N/15 mm | 8.9 | 7.4 | 6.2 | 6.9 | 5.8 | 6.2 | 7.1 | 8.1 | 7.3 |
| Evaluation | Heat resistance properties | Probe tack | | N/cm² | 2.3 | 2.8 | 3.3 | 1.1 | 0.9 | 1.3 | 2.0 | 2.4 | 0.9 |
| | | Adhesive force | | N/15 mm | 11.3 | 8.2 | 5.9 | 7.3 | 5.6 | 6.5 | 9.4 | 10.2 | 7.6 |
| | Mechanical properties | Tensile breaking elongation | | % | 253 | 253 | 253 | 250 | 253 | 255 | 253 | 255 | 254 |
| | | 100% tensile modulus | | MPa | 10 | 10 | 10 | 10 | 10 | 10 | 10 | 10 | 10 |

| | | | | | | | | | | | | | |
|---|---|---|---|---|---|---|---|---|---|---|---|---|---|
| * Reference Example | | | | | | | | | | | | | |

**Table 3**

| | | | | | Ex. 19 | Ex. 20 | Ex. 21* | Ex. 22* | Ex. 23 | Ex.24 | Ex. 25 | Ex. 26 |
|---|---|---|---|---|---|---|---|---|---|---|---|---|
| Substrate | | | | | Sub. 2 | Sub. 2 | Sub. 2 | Sub. 2 | Sub. 2 | Sub 2 | Sub. 2 | Sub. 2 |
| Substrate Blend | Vinyl halide-based resin (A) | Polyvinyl chloride | TH-1000 | parts by mass | 100 | 100 | 100 | 100 | 100 | 100 | 100 | 100 |
| | Polyester-based plasticizer (B) | Polyester adipate (Mw 2000. viscosity 1000) | PN-1030 | parts by mass | 40 | 40 | 40 | 40 | 40 | 40 | 40 | 40 |

| Adhesive | | | | | Adh. 11 | Adh. 12 | Adh. 13 | Adh. 14 | Adh. 15 | Adh. 16 | Adh. 17 | Adh. 18 |
|---|---|---|---|---|---|---|---|---|---|---|---|---|
| Adhesive Blend | Elastomer (C) | Natural rubber | HA LATEX | parts by mass | 100 | 100 | 100 | 100 | 100 | 100 | 100 | 100 |
| | | Styrene-butadiene rubber | Zepol L×430 | parts by mass | | | | | | | | |
| | | Styrene-isoprene-styrene rubber | Quintac 3270 | parts by mass | | | | | | | | |
| | Tackifier (D) | Terpene phenol (softening point 150°C) | Tamanol E200 | parts by mass | 100 | 160 | 50 | 200 | | | 200 | 50 |
| | | Rosin ester (softening point 120°C) | Mariester SK323NS | parts by mass | | | | | | | | |
| | | Terpene phenol (softening point 96°C) | SILVARES TP96 | parts by mass | | | | | | | | |
| | Inorganic microparticles (E) | Heavy calcium carbonate (particle size: 1.65 µm) | FMT65 | parts by mass | 100 | 160 | | | 50 | 200 | 50 | 200 |
| | | Colloidal calcium carbonate (particle size: 0.08 µm) | NEOLIGHT SP | parts by mass | | | | | | | | |
| | | Colloidal silica (particle size: 2-4 µm) | Snowtex ST-XS | parts by mass | | | | | | | | |
| Sheet properties | Adhesive properties | Probe tack | | N/cm² | 1.5 | 2.0 | 1.5 | 3.1 | 0.8 | 0.3 | 2.4 | 1.1 |
| | | Adhesive force | | N/15 mm | 7.5 | 6.9 | 7.8 | 7.8 | 7.1 | 5.1 | 7.5 | 6.4 |
| Evaluation | Heat resistance properties | Probe tack | | N/cm² | 2.0 | 2.2 | 2.0 | 5.1 | 1.4 | 0.5 | 3.8 | 1.4 |
| | | Adhesive force | | N/15 mm | 9.9 | 8.2 | 10.4 | 9.2 | 7.6 | 5.9 | 8.6 | 7.2 |
| | Mechanical properties | Tensile breaking elongation | | % | 255 | 255 | 250 | 253 | 250 | 253 | 250 | 253 |
| | | 100% tensile modulus | | MPa | 10 | 10 | 10 | 10 | 10 | 10 | 10 | 10 |

| | | | | | | | | | | | | |
|---|---|---|---|---|---|---|---|---|---|---|---|---|
| * Reference Example | | | | | | | | | | | | |

Table 4

| | | | | | Comp. Ex. 1 | Comp. Ex.2 | Comp. Ex. 3 | Comp. Ex.4 | Comp. Ex. 5 | Comp. Ex.6 | Comp. Ex. 7 | Comp. Ex. 8 |
|---|---|---|---|---|---|---|---|---|---|---|---|---|
| Substrate | | | | | Sub. 10 | Sub. 11 | Sub. 12 | Sub. 13 | Sub. 14 | Sub. 2 | Sub. 2 | Sub. 2 |
| Substrate Blend | Vinyl halide-based resin (A) | Polyvinyl chloride | TH-1000 | parts by mass | 100 | 100 | 100 | 100 | 100 | 100 | 100 | 100 |
| | Polyester-based plasticizer (B) | Polyester adipate (Mw 1000, viscosity 220) | PN-7160 | parts by mass | 10 | | | | | | | |
| | | Polyester adipate (Mw 2000, viscosity 1000) | PN-1030 | parts by mass | | 10 | 110 | | | 40 | 40 | 40 |
| | | Polyester adipate (Mw 3000, viscosity 1500) | P-300 | parts by mass | | | | 10 | | | | |
| | Plasticizer | Diisononyl phthalate (Mw 419, viscosity 190) | DINP | parts by mass | | | | | 40 | | | |

| Adhesive | | | | | Adh. 1 | Adh. 1 | Adh. 1 | Adh. 1 | Adh. 1 | Adh. 19 | Adh. 20 | Adh. 21 |
|---|---|---|---|---|---|---|---|---|---|---|---|---|
| Adhesive Blend | Elastomer (C) | Natural rubber | HA LATEX | parts by mass | 100 | 100 | 100 | 100 | 100 | 100 | 100 | 100 |
| | Tackifier (D) | Terpene phenol (softening point 150°C) | Tamanol E200 | parts by mass | 100 | 100 | 100 | 100 | 100 | 200 | 300 | |
| | Inorganic microparticles (E) | Heavy calcium carbonate (particle size: 1.65 µm) | FMT65 | parts by mass | | | | | | 200 | | 300 |
| Sheet properties | Adhesive prope rties | Probe tack | | N/cm² | 0.4 | 0.3 | 7.8 | 0.2 | 0.9 | 0.3 | 0.1 | 0.1 |
| | | Adhesive force | | N/15 mm | 4.4 | 3.8 | 11.8 | 3.1 | 9.9 | 1.3 | 0.2 | 0.1 |
| Evaluation | Heat resistance prope rties | Probe tack | | N/cm² | 3.8 | 1.8 | 8.4 | 1.1 | 9.8 | 1.5 | 1.5 | 0.3 |
| | | Adhesive force | | N/15 mm | 2.4 | 4.1 | 11.9 | 1.8 | 15.4 | 0.8 | 1.3 | 0.1 |
| | Mechanical properties | Tensile breaking elongation | | % | 53 | 48 | 428 | 42 | 298 | 255 | 254 | 256 |
| | | 100% tensile modulus | | MPa | 42 | 45 | 4 | 49 | 11 | 10 | 10 | 10 |

## Claims

1. An adhesive sheet comprising in this order: a substrate containing 20-100 parts by mass of a polyester-based plasticizer (B) with respect to 100 parts by mass of a vinyl halide-based resin (A); a primer layer; and an adhesive layer in which an included amount of a tackifier (D) is 0-250 parts by mass and an included amount of inorganic microparticles (E) having an average size of 0.08-20 µm measured by a laser diffraction/scattering type particle size distribution measurement method and being a 50% integrated particle size in volume-based particle size distribution, is 5-150 parts by mass with respect to 100 parts by mass of an elastomer (C), and a total value of the included amounts of the tackifier (D) and the inorganic microparticles (E) is 5-350 parts by mass; wherein the adhesive layers have a probe tack of 7 N/cm² or less in accordance with ASTM D 2979, measured as described in the description, and the adhesive force between the adhesive layers having a width of 15 mm measured based on a method described in the present specification is 1.5 N or more, and the inorganic microparticles (E) is selected from the group consisting of calcium carbonate and silica.

2. The adhesive sheet according to claim 1, wherein the polyester-based plasticizer (B) is an adipic acid-based polyester.

3. The adhesive sheet according to either claim 1 or 2, wherein the elastomer (C) in the adhesive layer is a natural rubber.

4. The adhesive sheet according to either claim 1 or 2, wherein the tackifier (D) has a softening point, measured by a ring-and-ball method, of 95°C or higher.

5. The adhesive sheet according to either claim 1 or 2, wherein the inorganic microparticles (E) are calcium carbonate.

6. A protective material using the adhesive sheet according to any one of claims 1-5.

7. A wire harness using the adhesive sheet according to any one of claims 1-5.

## Patentansprüche

1. Klebefolie, die in dieser Reihenfolge umfasst: ein Substrat, das 20-100 Masseteile eines Weichmachers auf Polyesterbasis (B) in Bezug auf 100 Masseteile eines Harzes auf Vinylhalogenidbasis (A) enthält; eine Grundierungsschicht; und eine Klebeschicht, in der eine enthaltene Menge eines Klebrigmachers (D) 0-250 Masseteile beträgt und eine enthaltene Menge anorganischer Mikroteilchen (E) mit einer durchschnittlichen Größe von 0,08-20 µm, gemessen durch ein Laserbeugungs-/Streuungstyp-Teilchengrößenverteilungsmessverfahren, und die eine zu 50% integrierte Teilchengröße in der volumenbasierten Teilchengrößenverteilung ist, 5-150 Masseteile in Bezug auf 100 Masseteile eines Elastomers (C) beträgt, und ein Gesamtwert der enthaltenen Mengen des Klebrigmachers (D) und der anorganischen Mikroteilchen (E) 5-350 Masseteile beträgt; wobei die Klebstoffschichten eine Sondenklebrigkeit von 7 N/cm² oder weniger gemäß ASTM D 2979 aufweisen, gemessen wie in der Beschreibung beschrieben, und die Klebkraft zwischen den Klebstoffschichten mit einer Breite von 15 mm, gemessen auf der Grundlage eines in der vorliegenden Patentschrift beschriebenen Verfahrens, 1,5 N oder mehr beträgt und die anorganischen Mikroteilchen (E) aus der Gruppe bestehend aus Calciumcarbonat und Siliciumdioxid ausgewählt sind.

2. Klebefolie nach Anspruch 1, wobei der Weichmacher (B) auf Polyesterbasis ein Polyester auf Adipinsäurebasis ist.

3. Klebefolie nach einem der Ansprüche 1 oder 2, wobei das Elastomer (C) in der Klebeschicht ein Naturkautschuk ist.

4. Klebefolie nach einem der Ansprüche 1 oder 2, wobei der Klebrigmacher (D) einen Erweichungspunkt, gemessen durch ein Ring-und-Kugel-Verfahren, von 95°C oder höher hat.

5. Klebefolie nach einem der Ansprüche 1 oder 2, wobei die anorganischen Mikropartikel (E) Calciumcarbonat sind.

6. Schutzmaterial unter Verwendung der Klebefolie nach einem der Ansprüche 1-5.

7. Kabelbaum unter Verwendung der Klebefolie nach einem der Ansprüche 1-5.

## Revendications

1. Feuille adhésive comprenant dans cet ordre : un substrat contenant 20-100 parties en masse d'un plastifiant à base de polyester (B) par rapport à 100 parties en masse d'une résine à base d'halogénure de vinyle (A) ; une couche de primaire ; et une couche adhésive dans laquelle une quantité incluse d'un agent d'adhésivité (D) est de 0-250 parties en masse et une quantité incluse de microparticules inorganiques (E) ayant une taille moyenne de 0,08-20 µm mesurée par une méthode de mesure de la distribution de la taille des particules de type diffraction/diffusion laser et étant une taille de particule intégrée de 50% dans la distribution de la taille des particules basée sur le volume, est de 5-150 parties en masse par rapport à 100 parties en masse d'un élastomère (C), et une valeur totale des quantités incluses de l'agent collant (D) et des microparticules inorganiques (E) est de 5-350 parties en masse ; dans lequel les couches adhésives ont un tack de sonde de 7 N/cm² ou moins selon ASTM D 2979, mesuré comme décrit dans la description, et la force adhésive entre les couches adhésives ayant une largeur de 15 mm mesurée sur la base d'un procédé décrit dans la présente spécification est de 1,5 N ou plus, et les microparticules inorganiques (E) sont choisies dans le groupe constitué par le carbonate de calcium et la silice.

2. Feuille adhésive selon la revendication 1, dans laquelle le plastifiant à base de polyester (B) est un polyester à base d'acide adipique.

3. Feuille adhésive selon l'une ou l'autre des revendications 1 ou 2, dans laquelle l'élastomère (C) dans la couche adhésive est un caoutchouc naturel.

4. Feuille adhésive selon l'une ou l'autre des revendications 1 ou 2, dans laquelle l'agent d'adhésivité (D) a un point de ramollissement, mesuré par une méthode à bille et anneau, de 95°C ou plus.

5. Feuille adhésive selon l'une ou l'autre des revendications 1 ou 2, dans laquelle les microparticules inorganiques (E) sont du carbonate de calcium.

6. Matériau de protection utilisant la feuille adhésive selon l'une quelconque des revendications 1 à 5.

7. Harnais de câbles utilisant la feuille adhésive selon l'une quelconque des revendications 1 à 5.
